# EUROPEAN PATENT APPLICATION

(11) **EP 4 297 523 A1**
(43) Date of publication of application: **27.12.2023**
(21) Application number: 22762512.6
(22) Date of filing: 01.03.2022
(51) Int. Cl.: H04W 76/25

(54) **INFORMATION TRANSMISSION METHOD, INFORMATION ACQUISITION METHOD, AND NETWORK-SIDE DEVICE**

(30) Priority: 05.03.2021 CN 202110247331
(71) Applicant: Vivo Mobile Communication Co., Ltd., Dongguan, Guangdong 523863 (CN)
(72) Inventor: ZHENG, Qian, Dongguan, Guangdong 523863 (CN); YANG, Xiaodong, Dongguan, Guangdong 523863 (CN); LIU, Jiamin, Dongguan, Guangdong 523863 (CN)
(74) Representative: Murgitroyd & Company
(86) International application number: PCT/CN2022/078558
(87) International publication number: WO 2022/184047

(57) **Abstract**

This application discloses an information transmission method, an information acquiring method, and a network-side device, pertaining to the field of communications technologies. The method includes: in a case that at least one remote UE establishes an RRC connection with a first network-side device through relay UE, configuring, by the first network-side device, UE context information, where in a case that the UE context information is context information of the relay UE, the UE context information includes first related information of the remote UE served by the relay UE; and/or, in a case that the UE context information is context information of the remote UE, the UE context information includes second related information of the relay UE providing a relay service for the remote UE.

## Description

### CROSS-REFERENCE TO RELATED APPLICATIONS

This application claims priority to Chinese Patent Application No. 202110247331.5 filed in China on March 5, 2021, which is incorporated herein by reference in its entirety.

### TECHNICAL FIELD

The present invention relates to the field of communications technologies, and in particular, to an information transmission method, an information acquiring method, and a network-side device.

### BACKGROUND

In a scenario where remote UE (Remote UE) establishes a radio resource control (Radio Resource Control, RRC) connection with a base station through relay UE (Relay UE), the RRC connection of the remote UE is influenced by two links: a connection link of a direct communication interface (PC5 interface) and a connection link of a cellular network communication interface (Uu interface). When the RRC connection of the remote UE fails in either of the foregoing two links, it is difficult to quickly resume the RRC connection of the remote UE.

### SUMMARY

Embodiments of this application provide an information transmission method, an information acquiring method, and a network-side device, which can overcome the difficulty associated with quickly resuming a failed RRC connection of the remote UE.

According to a first aspect, an information transmission method is provided, including:
in a case that at least one remote UE establishes an RRC connection with a first network-side device through relay UE, configuring, by the first network-side device, UE context information, where
in a case that the UE context information is context information of the relay UE, the UE context information includes first related information of the remote UE served by the relay UE; and/or, in a case that the UE context information is context information of the remote UE, the UE context information includes second related information of the relay UE providing a relay service for the remote UE.

According to a second aspect, an information acquiring method is provided, including:
sending, by a second network-side device, an acquiring request for UE context to the first network-side device, where the acquiring request for UE context is sent by the second network-side device after receiving first information sent by first UE, the first network-side device configures at least one of context information of relay UE and context information of remote UE, the context information of the relay UE includes first related information of the remote UE served by the relay UE, and the context information of the remote UE includes second related information of the relay UE providing a relay service for the remote UE; and
acquiring, by the second network-side device, feedback information sent by the first network-side device, where
in a case that the feedback information is an acquiring response of UE context and the first UE is the relay UE, the acquiring response of UE context includes at least one of context information of the relay UE and context information of the remote UE; or
in a case that the feedback information is an acquiring response of UE context and the first UE is the remote UE, the acquiring response of UE context includes at least one of context information of the remote UE and context information of the relay UE.

According to a third aspect, an information transmission apparatus is provided, including:
a first processing module, configured to configure UE context information in a case that at least one remote UE establishes an RRC connection with a first network-side device through relay UE, where
in a case that the UE context information is context information of the relay UE, the UE context information includes first related information of the remote UE served by the relay UE; and/or, in a case that the UE context information is context information of the remote UE, the UE context information includes second related information of the relay UE providing a relay service for the remote UE.

According to a fourth aspect, an information acquiring apparatus is provided, including:
a second sending module, configured to send an acquiring request for UE context to the first network-side device, where the acquiring request for UE context is sent by the second network-side device after receiving first information sent by first UE, the first network-side device configures at least one of context information of relay UE and context information of remote UE, the context information of the relay UE includes first related information of the remote UE served by the relay UE, and the context information of the remote UE includes second related information of the relay UE providing a relay service for the remote UE; and
a second receiving module, configured to acquire feedback information sent by the first network-side device, where
in a case that the feedback information is an acquiring response of UE context and the first UE is the relay UE, the acquiring response of UE context includes at least one of context information of the relay UE and context information of the remote UE; or
in a case that the feedback information is an acquiring response of UE context and the first UE is the remote UE, the acquiring response of UE context includes at least one of context information of the remote UE and context information of the relay UE.

According to a fifth aspect, a network-side device is provided, where the network-side device includes a processor, a memory, and a program or instructions stored in the memory and executable on the processor, and when the program or instructions are executed by the processor, the steps of the method according to the first aspect or the steps of the method according to the second aspect are implemented.

According to a sixth aspect, a readable storage medium is provided, where the readable storage medium stores a program or instructions, and when the program or instructions are executed by a processor, the steps of the method according to the first aspect or the steps of the method according to the second aspect are implemented.

According to a seventh aspect, a chip is provided, where the chip includes a processor and a communication interface, the communication interface is coupled to the processor, and the processor is configured to run a program or instructions, to implement the steps of the method according to the first aspect or the steps of the method according to the second aspect.

According to an eighth aspect, an embodiment of this application provides a computer program product, where the computer program product is stored in a non-volatile storage medium, and the computer program product is executed by at least one processor, to implement the steps of the method according to the first aspect or the steps of the method according to the second aspect.

In the embodiments of this application, the first network-side device configures the context of the remote UE and/or the relay UE, where the context of the remote UE includes the second related information of the relay UE providing the relay service for the remote UE, and the context of the relay UE includes the first related information of the remote UE served by the relay UE. This ensures quick resumption of an RRC connection of the remote UE in a case that either of a connection link of the PC5 interface and a connection link of the Uu interface fails, which ensures reliability of relay communication.

### BRIEF DESCRIPTION OF DRAWINGS

FIG. 1 is a structural diagram of a communications system to which an embodiment of this application is applicable;
FIG. 2 is a schematic flowchart of an information transmission method according to an embodiment of this application;
FIG. 3 is a schematic flowchart of an information acquiring method according to an embodiment of this application;
FIG. 4 is a first schematic diagram of interaction between a network-side device and UE according to an embodiment of this application;
FIG. 5 is a second schematic diagram of interaction between a network-side device and UE according to an embodiment of this application;
FIG. 6 is a schematic modular diagram of an information transmission apparatus according to an embodiment of this application;
FIG. 7 is a schematic modular diagram of an information acquiring apparatus according to an embodiment of this application;
FIG. 8 is a structural block diagram of a communications device according to an embodiment of this application; and
FIG. 9 is a structural block diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments acquired by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that data used in this way are interchangeable in appropriate circumstances such that the embodiments of this application can be implemented in other orders than the orders illustrated or described herein. In addition, objects differentiated by "first" and "second" are generally of a same type, and the quantities of the objects are not limited, for example, there may be one or more first objects. In addition, in the specification and claims, "and/or" represents presence of at least one of connected objects, and the symbol "/" in this specification usually indicates an "or" relationship between associated obj ects.

It should be noted that techniques described in the embodiments of this application are not limited to a long term evolution (Long Term Evolution, LTE) or LTE-Advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology not only can be used for the foregoing system and radio technologies, but also can be used for other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

To help persons skilled in the art better understand the embodiments of the present invention, sidelink (Sidelink) relay (Relay) is first described below.

Relay technology in a wireless communications system is to add one or more relay nodes between a base station and UE, to forward a wireless signal once or multiple times. That is, the wireless signal needs to go through multiple hops to reach the UE.

The wireless relay technology can not only be used to expand cell coverage and compensate for a blind spot in cell coverage, but also improve cell capacity through spatial resource reuse. For indoor coverage, the relay technology can also be used to overcome penetration loss and improve quality of the indoor coverage.

Taking a simple two-hop relay as an example, the wireless relay divides a link from the base station to the UE into two links: a link from the base station to a relay node and a link from the relay node to the UE, to provide an opportunity of replacing a link of poor quality with two links of better quality, thereby acquiring higher link capacity and better coverage.

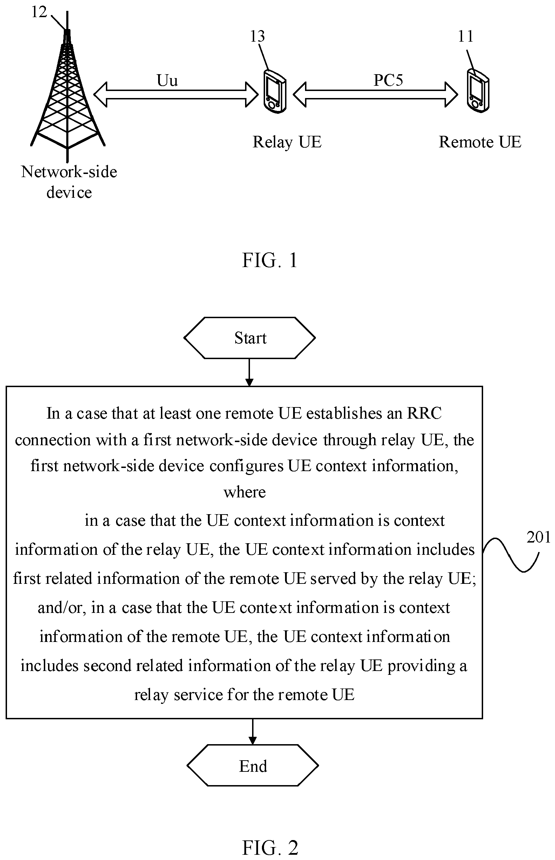

As shown in FIG. 1, relay UE 13 is connected to remote UE 11 at one end, and connected to a network-side device 12 at the other end. The remote UE 11 may also be referred to as a terminal device or user equipment (User Equipment, UE). The remote UE may be a terminal-side device such as a mobile phone, a tablet computer (Tablet Computer), a laptop computer (Laptop Computer), or referred to as a notebook computer, a personal digital assistant (Personal Digital Assistant, PDA), a palmtop computer, a netbook, an ultra-mobile personal computer (Ultra-Mobile Personal Computer, UMPC), Mobile Internet Device (Mobile Internet Device, MID), a wearable device (Wearable Device), vehicular user equipment (VUE), or pedestrian user equipment (PUE). The wearable device includes a wristband, earphones, glasses, or the like. It should be noted that a specific type of remote UE is not limited in the embodiments of this application. The network-side device 12 may be a base station or a core network device, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a WiFi node, a transmission and reception point (Transmitting Receiving Point, TRP), or another appropriate term in the art. As long as the same technical effect is achieved, the base station is not limited to a specific technical term. It should be noted that the base station in the NR system is taken only as an example in the embodiments of this application, but is not used to limit a specific type of the base station.

The following specifically describes the information transmission method provided in the embodiments of this application through specific embodiments and application scenarios thereof with reference to the accompanying drawings.

As shown in FIG. 2, an embodiment of this application provides an information transmission method, including the following step:

Step 201: In a case that at least one remote UE establishes an RRC connection with a first network-side device through relay UE, the first network-side device configures UE context information.

In a case that the UE context information is context information of the relay UE, the UE context information includes first related information of the remote UE served by the relay UE; and/or, in a case that the UE context information is context information of the remote UE, the UE context information includes second related information of the relay UE providing a relay service for the remote UE.

Optionally, the first related information includes at least one of the following:
identifier information of the at least one remote UE, where the identifier information can be in any form such as a source layer 2 identifier (source L2 ID), a destination layer 2 identifier (destination L2 ID), a cell radio network temporary identifier (Cell Radio Network Temporary Identifier, C-RNTI), and a local index (local index) allocated by the relay UE; and
first configuration information associated with each piece of identifier information, where
the first configuration information includes at least one of the following:
   a mapping from a radio link control (Radio Link Control, RLC) channel of a first interface to an RLC channel of a second interface;
   a mapping from an RLC channel of the first interface to a bearer of the remote UE;
   a mapping from an RLC channel of the first interface to a bearer of the relay UE;
   a mapping from an RLC channel of the second interface to a bearer of the remote UE;
   a mapping from an RLC channel of the second interface to a bearer of the relay UE;
   an RLC channel configuration of the first interface, where the first interface may be specifically a PC5 interface, and the RLC channel configuration of the first interface includes at least one of a PC5 RLC channel identifier (channel ID), a PC5 physical layer (PC5 PHY layer), a media access control (Media Access Control, MAC) layer, and an RLC layer configuration;
   an RLC channel configuration of the second interface, where the second interface may be specifically a Uu interface, and the RLC channel configuration of the second interface includes at least one of a Uu RLC channel identifier (Uu RLC channel ID), a Uu PHY layer, a MAC layer, and an RLC layer configuration;
   a bearer configuration of the remote UE, including at least one of a Uu bearer ID, a Uu SDAP layer, a Uu PDCP layer, and a PC5 RLC channel configuration; and
   a bearer configuration of the relay UE, including at least one of a Uu bearer ID, a Uu SDAP layer, a Uu PDCP layer, and a Uu RLC channel configuration, where
   the first interface is a connection interface between the relay UE and the remote UE, and the second interface is a connection interface between the relay UE and the network-side device.

Optionally, the second related information includes at least one of the following:
identifier information of at least one relay UE, where the identifier information can be in any form such as a source L2 ID, a destination L2 ID, a C-RNTI, and a local index allocated by the remote UE; and
second configuration information associated with each piece of identifier information, where
the second configuration information includes at least one of the following:
   a mapping from an RLC channel of a first interface to an RLC channel of a second interface;
   a mapping from an RLC channel of the first interface to a bearer of the remote UE;
   a mapping from an RLC channel of the first interface to a bearer of the relay UE;
   a mapping from an RLC channel of the second interface to a bearer of the remote UE;
   a mapping from an RLC channel of the second interface to a bearer of the relay UE;
   an RLC channel configuration of the first interface, where the first interface may be specifically a PC5 interface, and the RLC channel configuration of the first interface includes at least one of a PC5 RLC channel ID, a PC5 PHY layer, a MAC layer, and an RLC layer configuration;
   an RLC channel configuration of the second interface, where the second interface may be specifically a Uu interface, and the RLC channel configuration of the second interface includes at least one of a Uu RLC channel ID, a Uu PHY layer, a MAC layer, an RLC layer, and an RLC channel ID configuration;
   a bearer configuration of the remote UE, including at least one of a Uu bearer ID, a Uu SDAP layer, a Uu PDCP layer, and a PC5 RLC channel configuration; and
   a bearer configuration of the relay UE, including at least one of a Uu bearer ID, a Uu SDAP layer, a Uu PDCP layer, and a Uu RLC channel configuration, where
   the first interface is a connection interface between the relay UE and the remote UE, and the second interface is a connection interface between the relay UE and the network-side device.

In this embodiment of this application, the first network-side device configures the context of the remote UE and/or the relay UE, the context of the remote UE includes the second related information of the relay UE providing the relay service for the remote UE, and the context of the relay UE includes the first related information of the remote UE served by the relay UE. This ensures quick resumption of an RRC connection of the remote UE in a case that either of a connection link of the PC5 interface and a connection link of the Uu interface fails, which ensures reliability of relay communication.

Optionally, the method in this embodiment of this application further includes:
receiving, by the first network-side device, an acquiring request for UE context sent by a second network-side device, where the acquiring request for UE context is sent by the second network-side device after receiving first information sent by the first UE; and
sending, by the first network-side device, feedback information to the second network-side device, where
in a case that the feedback information is an acquiring response of UE context and the first UE is the relay UE, the acquiring response of UE context includes at least one of context information of the relay UE and context information of the remote UE; or
in a case that the feedback information is an acquiring response of UE context and the first UE is the remote UE, the acquiring response of UE context includes at least one of context information of the remote UE and context information of the relay UE.

Optionally, the foregoing first information may be an RRC reestablishment request or an RRC connection resume request.

In this embodiment of this application, the first network-side device configures the context of the remote UE and/or the relay UE, the context of the remote UE includes the second related information of the relay UE providing the relay service for the remote UE, the context of the relay UE includes the first related information of the remote UE served by the relay UE, and at least one of the context of the remote UE and the context of the relay UE can be sent to the second network-side device. This ensures quick resumption of an RRC connection of the remote UE in a case that either of a connection link of the PC5 interface and a connection link of the Uu interface fails, which ensures reliability of relay communication.

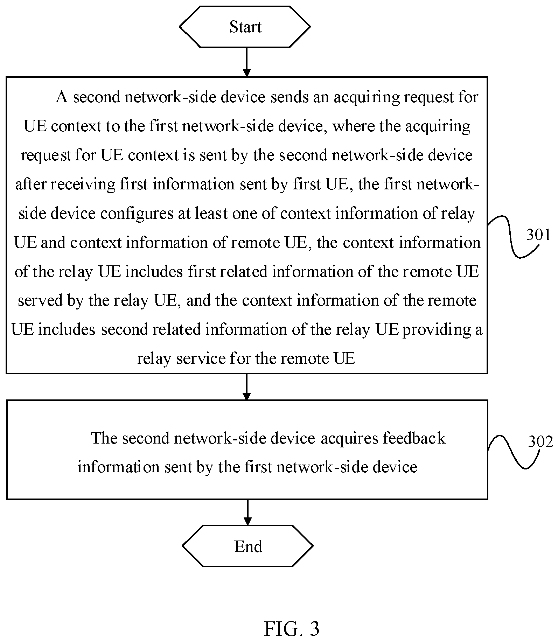

As shown in FIG. 3, an embodiment of this application further provides an information acquiring method, including the following steps:
Step 301: A second network-side device sends an acquiring request for UE context to the first network-side device, where the acquiring request for UE context is sent by the second network-side device after receiving first information sent by first UE, the first network-side device configures at least one of context information of relay UE and context information of remote UE, the context information of the relay UE includes first related information of the remote UE served by the relay UE, and the context information of the remote UE includes second related information of the relay UE providing a relay service for the remote UE.
Step 302: The second network-side device acquires feedback information sent by the first network-side device.

In a case that the feedback information is an acquiring response of UE context and the first UE is the relay UE, the acquiring response of UE context includes at least one of context information of the relay UE and context information of the remote UE; or
in a case that the feedback information is an acquiring response of UE context and the first UE is the remote UE, the acquiring response of UE context includes at least one of context information of the remote UE and context information of the relay UE.

In this embodiment of this application, the first network-side device configures the context of the remote UE and/or the relay UE, the context of the remote UE includes the second related information of the relay UE providing the relay service for the remote UE, the context of the relay UE includes the first related information of the remote UE served by the relay UE, and at least one of the context of the remote UE and the context of the relay UE can be sent to the second network-side device. This ensures quick resumption of an RRC connection of the remote UE in a case that either of a connection link of the PC5 interface and a connection link of the Uu interface fails, which ensures reliability of relay communication.

Optionally, the first related information includes at least one of the following:
identifier information of at least one remote UE; and
first configuration information associated with each piece of identifier information, where
the first configuration information includes at least one of the following:
   a mapping from a radio link control RLC channel of a first interface to an RLC channel of a second interface;
   a mapping from an RLC channel of the first interface to a bearer of the remote UE;
   a mapping from an RLC channel of the first interface to a bearer of the relay UE;
   a mapping from an RLC channel of the second interface to a bearer of the remote UE;
   a mapping from an RLC channel of the second interface to a bearer of the relay UE;
   an RLC channel configuration of the first interface;
   an RLC channel configuration of the second interface;
   a bearer configuration of the remote UE; and
   a bearer configuration of the relay UE, where
   the first interface is a connection interface between the relay UE and the remote UE, and the second interface is a connection interface between the relay UE and the network-side device.

Optionally, the second related information includes at least one of the following:
identifier information of at least one relay UE; and
second configuration information associated with each piece of identifier information, where
the second configuration information includes at least one of the following:
   a mapping from an RLC channel of a first interface to an RLC channel of a second interface;
   a mapping from an RLC channel of the first interface to a bearer of the remote UE;
   a mapping from an RLC channel of the first interface to a bearer of the relay UE;
   a mapping from an RLC channel of the second interface to a bearer of the remote UE;
   a mapping from an RLC channel of the second interface to a bearer of the relay UE;
   an RLC channel configuration of the first interface;
   an RLC channel configuration of the second interface;
   a bearer configuration of the remote UE; and
   a bearer configuration of the relay UE, where
   the first interface is a connection interface between the relay UE and the remote UE, and the second interface is a connection interface between the relay UE and the network-side device.

It should be noted that the foregoing first related information is the same as the first related information in the foregoing embodiment of the information transmission method, and the foregoing second related information is the same as the second related information in the foregoing embodiment of the information transmission method. Details are not described herein again.

Optionally, in a case that the first UE is the relay UE, after the second network-side device acquires the feedback information sent by the first network-side device, the method further includes:
sending, by the second network-side device, first RRC reconfiguration to the remote UE served by the first UE, where the first RRC reconfiguration includes an incremental configuration (for example, delta configuration) generated based on the context of the remote UE.

Optionally, in a case that the feedback information is acquiring failure information for UE context and the first UE is the relay UE, after the second network-side device acquires feedback information sent by the first network-side device, the method further includes:
sending, by the second network-side device, second RRC reconfiguration to the remote UE served by the first UE, where the second RRC reconfiguration includes a full configuration (full configuration).

Optionally, in a case that the first UE is the remote UE, after the second network-side device acquires the feedback information sent by the first network-side device, the method further includes:
sending, by the second network-side device, third RRC reconfiguration to the relay UE serving the first UE, where the third RRC reconfiguration includes an incremental configuration generated based on the context of the relay UE.

Optionally, in a case that the feedback information is acquiring failure information for UE context and the first UE is the remote UE, after the second network-side device acquires feedback information sent by the first network-side device, the method further includes:
sending, by the second network-side device, fourth RRC reconfiguration to the relay UE serving the first UE, where the fourth RRC reconfiguration includes a full configuration.

In this embodiment of this application, the first network-side device configures the context of the remote UE and/or the relay UE, the context of the remote UE includes the second related information of the relay UE providing the relay service for the remote UE, the context of the relay UE includes the first related information of the remote UE served by the relay UE, and at least one of the context of the remote UE and the context of the relay UE can be sent to the second network-side device. This ensures quick resumption of an RRC connection of the remote UE in a case that either of a connection link of the PC5 interface and a connection link of the Uu interface fails, which ensures reliability of relay communication.

This application is described below with reference to specific embodiments.

Embodiment 1: In a case that both remote UE and relay UE are in an RRC connected (Connected) state, a network side defines a method for the network side to configure context of the relay UE.

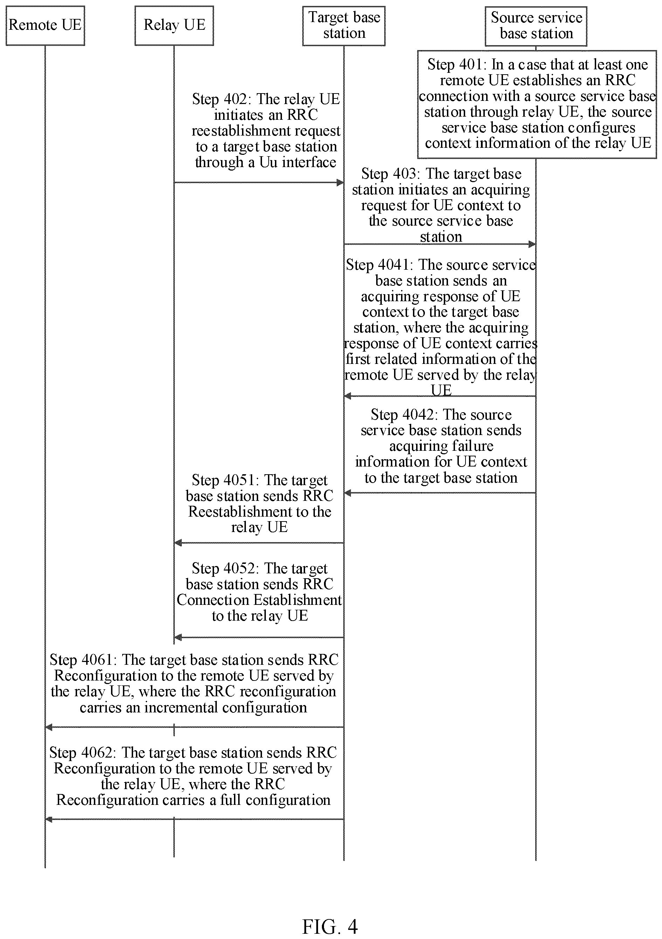

As shown in FIG. 4, the method in this application includes the following steps:

Step 401: In a case that at least one remote UE establishes an RRC connection with a source service base station through relay UE, the source service base station configures context information of the relay UE.

The context information of the relay UE includes first related information of the remote UE served by the relay UE.

Step 402: The relay UE initiates an RRC reestablishment request to a target base station through a Uu interface.

Step 403: The target base station initiates an acquiring request for UE context to the source service base station.

Step 4041: The source service base station sends an acquiring response of UE context to the target base station, where the acquiring response of UE context carries first related information of the remote UE served by the relay UE.

Step 4042: The source service base station sends acquiring failure information for UE context to the target base station.

Step 4051: The target base station sends RRC Reestablishment to the relay UE.

In step 4051, the relay UE sends RRC Reestablishment Complete to target UE.

Step 4052: The target base station sends RRC Connection Establishment to the relay UE.

In step 4052, the relay UE sends RRC Connection Establishment Complete to the target base station.

Step 4061: The target base station sends RRC Reconfiguration to the remote UE served by the relay UE. The RRC reconfiguration carries an incremental configuration (delta configuration).

In step 4061, the remote UE sends RRC Reconfiguration Complete to the target base station.

Step 4062: The target base station sends RRC Reconfiguration to the remote UE served by the relay UE, where the RRC Reconfiguration carries a full configuration (full configuration).

In step 4062, the remote UE sends RRC Reconfiguration Complete to the target base station.

It should be noted that the foregoing step 4041 and step 4042 are parallel steps, the foregoing step 4051 and step 4052 are parallel steps, and the foregoing step 4061 and step 4062 are parallel steps. After the foregoing step 4041 is performed, step 4051 and step 4061 are further performed. After the foregoing step 4042 is performed, the foregoing step 4052 and step 4062 are further performed.

In addition, in a case that the remote UE is in an RRC connected state and the relay UE is in the RRC inactive state, Embodiment 1 can basically be reused by replacing RRC Reestablishment related to the relay UE with RRC Resume (Connection Resume).

Embodiment 2: In a case that both remote UE and relay UE are in an RRC connected state, a network side defines a method for the network side to configure context of the remote UE.

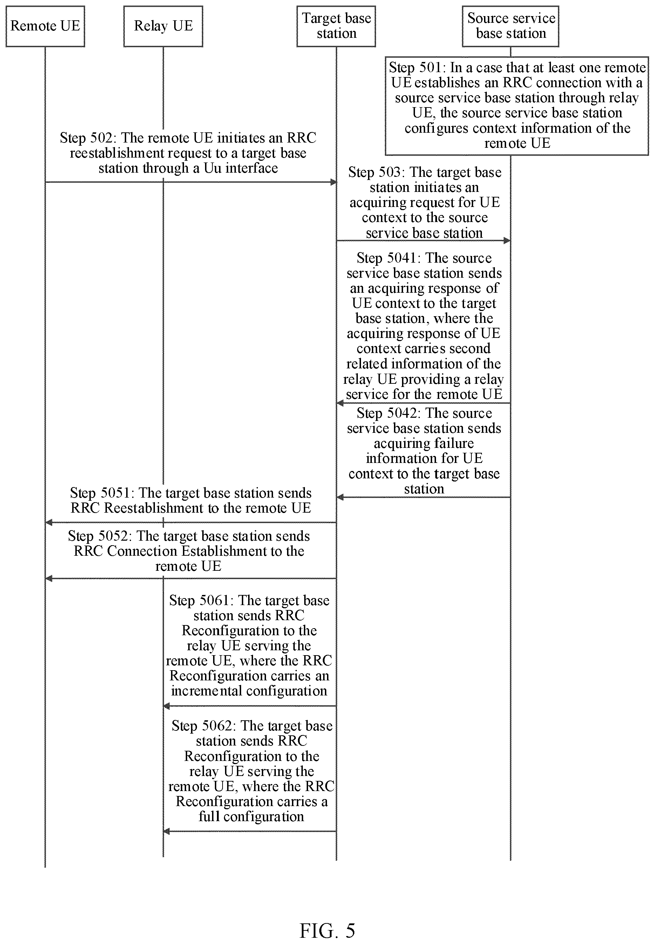

As shown in FIG. 5, the method in this application includes the following steps:

Step 501: In a case that at least one remote UE establishes an RRC connection with a source service base station through relay UE, the source service base station configures context information of the remote UE.

The context information of the remote UE includes second related information of the relay UE providing a relay service for the remote UE.

Step 502: The remote UE initiates an RRC reestablishment request to a target base station through a Uu interface.

Step 503: The target base station initiates an acquiring request for UE context to the source service base station.

Step 5041: The source service base station sends an acquiring response of UE context to the target base station, where the acquiring response of UE context carries second related information of the relay UE providing a relay service for the remote UE.

Step 5042: The source service base station sends acquiring failure information for UE context to the target base station.

Step 5051: The target base station sends RRC Reestablishment to the remote UE.

In step 5051, the remote UE sends the RRC Reestablishment Complete to target UE.

Step 5052: The target base station sends RRC Connection Establishment to the remote UE.

In step 5052, the remote UE sends RRC Connection Establishment Complete to the target base station.

Step 5061: The target base station sends RRC Reconfiguration to the relay UE serving the remote UE, where the RRC Reconfiguration carries an incremental configuration (delta configuration).

In step 5061, the relay UE sends RRC Reconfiguration Complete to the target base station.

Step 5062: The target base station sends RRC Reconfiguration to the relay UE serving the remote UE, where the RRC Reconfiguration carries a full configuration (full configuration).

In step 5062, the relay UE sends RRC Reconfiguration Complete to the target base station.

It should be noted that the foregoing step 5041 and step 5042 are parallel steps, the foregoing step 5051 and step 5052 are parallel steps, and the foregoing step 5061 and step 5062 are parallel steps. After the foregoing step 5041 is performed, step 5051 and step 5061 are further performed. After the foregoing step 5042 is performed, the foregoing step 5052 and step 5062 are further performed.

In addition, in a case that the remote UE is in an RRC inactive state and the relay UE is in the RRC connected state, Embodiment 2 can basically be reused by replacing RRC Reestablishment related to the remote UE with RRC Resume (Connection Resume).

In this embodiment of the present invention, with the method in which the source service base station configures the context of the remote UE and/or the relay UE the RRC connection of the remote UE may be quickly resumed in a case that a connection failure occurs in any segment of PC5 and Uu, thereby ensuring reliability of relay communication.

It should be noted that the information transmission method provided in the embodiments of this application may be executed by an information transmission apparatus, or a control module in the information transmission apparatus that is configured to execute the information transmission method. In this embodiment of this application, an example of executing the information transmission method by the information transmission apparatus is used to describe the information transmission apparatus provided in this embodiment of this application.

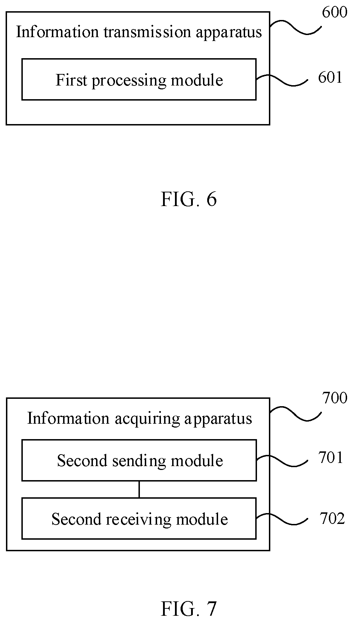

As shown in FIG. 6, an embodiment of this application provides an information transmission apparatus 600, including:
a first processing module 601, configured to configure UE context information in a case that at least one remote UE establishes an RRC connection with a first network-side device through relay UE, where
in a case that the UE context information is context information of the relay UE, the UE context information includes first related information of the remote UE served by the relay UE; and/or, in a case that the UE context information is context information of the remote UE, the UE context information includes second related information of the relay UE providing a relay service for the remote UE.

Optionally, the apparatus in this embodiment of this application further includes:
a determining module, configured to determine whether the remote UE establishes an RRC connection with the first network-side device through the relay UE.

Optionally, the apparatus in this embodiment of this application further includes:
a first receiving module, configured to receive an acquiring request for UE context sent by a second network-side device, where the acquiring request for UE context is sent by the second network-side device after receiving first information sent by the first UE; and
a first sending module, configured to send feedback information to the second network-side device, where
in a case that the feedback information is an acquiring response of UE context and the first UE is the relay UE, the acquiring response of UE context includes at least one of context information of the relay UE and context information of the remote UE; or
in a case that the feedback information is an acquiring response of UE context and the first UE is the remote UE, the acquiring response of UE context includes at least one of context information of the remote UE and context information of the relay UE.

Optionally, the first related information includes at least one of the following:
identifier information of at least one remote UE; and
first configuration information associated with each piece of identifier information, where
the first configuration information includes at least one of the following:
   a mapping from a radio link control RLC channel of a first interface to an RLC channel of a second interface;
   a mapping from an RLC channel of the first interface to a bearer of the remote UE;
   a mapping from an RLC channel of the first interface to a bearer of the relay UE;
   a mapping from an RLC channel of the second interface to a bearer of the remote UE;
   a mapping from an RLC channel of the second interface to a bearer of the relay UE;
   an RLC channel configuration of the first interface;
   an RLC channel configuration of the second interface;
   a bearer configuration of the remote UE; and
   a bearer configuration of the relay UE, where
   the first interface is a connection interface between the relay UE and the remote UE, and the second interface is a connection interface between the relay UE and the network-side device.

Optionally, the second related information includes at least one of the following:
identifier information of at least one relay UE; and
second configuration information associated with each piece of identifier information, where
the second configuration information includes at least one of the following:
   a mapping from an RLC channel of a first interface to an RLC channel of a second interface;
   a mapping from an RLC channel of the first interface to a bearer of the remote UE;
   a mapping from an RLC channel of the first interface to a bearer of the relay UE;
   a mapping from an RLC channel of the second interface to a bearer of the remote UE;
   a mapping from an RLC channel of the second interface to a bearer of the relay UE;
   an RLC channel configuration of the first interface;
   an RLC channel configuration of the second interface;
   a bearer configuration of the remote UE; and
   a bearer configuration of the relay UE, where
   the first interface is a connection interface between the relay UE and the remote UE, and the second interface is a connection interface between the relay UE and the network-side device.

The information transmission apparatus provided in this embodiment of this application can implement each process implemented in the method embodiment in FIG. 2, with the same technical effects achieved. To avoid repetition, details are not described herein again.

It should be noted that the information acquiring method provided in the embodiments of this application may be executed by an information acquiring apparatus or a control module in the information acquiring apparatus that is configured to execute the information acquiring method. In this embodiment of this application, an example of executing the information acquiring method by the information acquiring apparatus is used to describe the information acquiring apparatus provided in this embodiment of this application.

As shown in FIG. 7, an embodiment of this application provides an information acquiring apparatus 700, including:
a second sending module 701, configured to send an acquiring request for UE context to the first network-side device, where the acquiring request for UE context is sent by the second network-side device after receiving first information sent by first UE, the first network-side device configures at least one of context information of relay UE and context information of remote UE, the context information of the relay UE includes first related information of the remote UE served by the relay UE, and the context information of the remote UE includes second related information of the relay UE providing a relay service for the remote UE; and
a second receiving module 702, configured to acquire feedback information sent by the first network-side device, where
in a case that the feedback information is an acquiring response of UE context and the first UE is the relay UE, the acquiring response of UE context includes at least one of context information of the relay UE and context information of the remote UE; or
in a case that the feedback information is an acquiring response of UE context and the first UE is the remote UE, the acquiring response of UE context includes at least one of context information of the remote UE and context information of the relay UE.

Optionally, the first related information includes at least one of the following:
identifier information of at least one remote UE; and
first configuration information associated with each piece of identifier information, where
the first configuration information includes at least one of the following:
   a mapping from a radio link control RLC channel of a first interface to an RLC channel of a second interface;
   a mapping from an RLC channel of the first interface to a bearer of the remote UE;
   a mapping from an RLC channel of the first interface to a bearer of the relay UE;
   a mapping from an RLC channel of the second interface to a bearer of the remote UE;
   a mapping from an RLC channel of the second interface to a bearer of the relay UE;
   an RLC channel configuration of the first interface;
   an RLC channel configuration of the second interface;
   a bearer configuration of the remote UE; and
   a bearer configuration of the relay UE, where
   the first interface is a connection interface between the relay UE and the remote UE, and the second interface is a connection interface between the relay UE and the network-side device.

Optionally, the second related information includes at least one of the following:
identifier information of at least one relay UE; and
second configuration information associated with each piece of identifier information, where
the second configuration information includes at least one of the following:
   a mapping from an RLC channel of a first interface to an RLC channel of a second interface;
   a mapping from an RLC channel of the first interface to a bearer of the remote UE;
   a mapping from an RLC channel of the first interface to a bearer of the relay UE;
   a mapping from an RLC channel of the second interface to a bearer of the remote UE;
   a mapping from an RLC channel of the second interface to a bearer of the relay UE;
   an RLC channel configuration of the first interface;
   an RLC channel configuration of the second interface;
   a bearer configuration of the remote UE; and
   a bearer configuration of the relay UE, where
   the first interface is a connection interface between the relay UE and the remote UE, and the second interface is a connection interface between the relay UE and the network-side device.

Optionally, the apparatus in this embodiment of this application further includes:
a third sending module, configured to: in a case that the first UE is the relay UE, after the second network-side device acquires the feedback information sent by the first network-side device, send first RRC reconfiguration to the remote UE served by the first UE, where the first RRC reconfiguration includes an incremental configuration generated based on the context of the remote UE.

Optionally, the apparatus in this embodiment of this application further includes:
a fourth sending module, configured to: in a case that the feedback information is acquiring failure information for UE context and the first UE is the relay UE, after the second network-side device acquires the feedback information sent by the first network-side device, send second RRC reconfiguration to the remote UE served by the first UE, where the second RRC reconfiguration includes a full configuration.

Optionally, the apparatus in this embodiment of this application further includes:
a fifth sending module, configured to: in a case that the first UE is the remote UE, after the second network-side device acquires the feedback information sent by the first network-side device, send third RRC reconfiguration to the relay UE serving the first UE, where the third RRC reconfiguration includes an incremental configuration generated based on the context of the relay UE.

Optionally, the apparatus in this embodiment of this application further includes:
a sixth sending module, configured to: in a case that the feedback information is acquiring failure information for UE context and the first UE is the remote UE, after the second network-side device acquires the feedback information sent by the first network-side device, send fourth RRC reconfiguration to the relay UE serving the first UE, where the fourth RRC reconfiguration includes a full configuration.

The information acquiring apparatus provided in this embodiment of this application can implement each process implemented in the method embodiment in FIG. 3, with the same technical effects achieved. To avoid repetition, details are not described herein again.

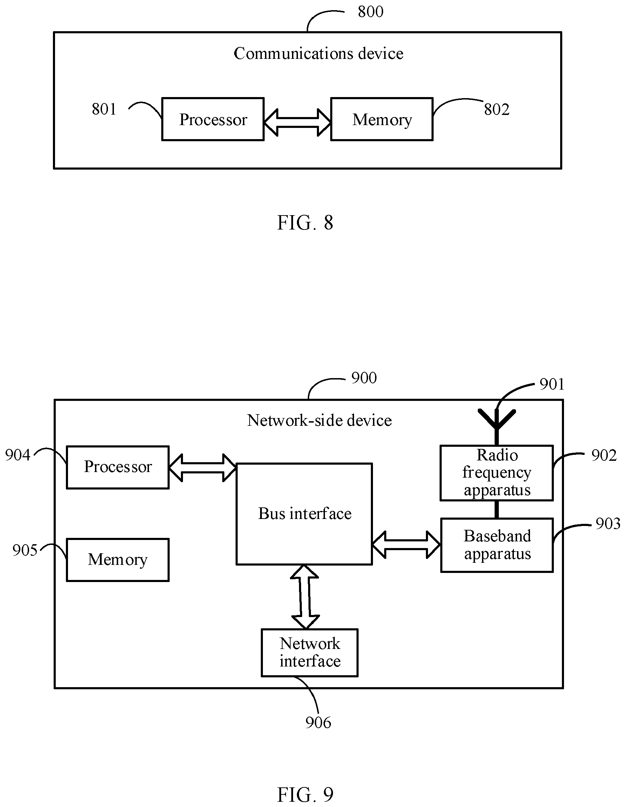

Optionally, as shown in FIG. 8, an embodiment of this application further provides a communications device 800, including a processor 801, a memory 802, and a program or instructions stored in the memory 802 and executable on the processor 801, where in a case that the communications device 800 is the first network-side device and the program or instructions are executed by the processor 801, the processes in the embodiment of the foregoing information transmission method are implemented, with the same technical effects achieved. In a case that the communications device 800 is the second network-side device and the program or instructions are executed by the processor 801, the processes in the embodiment of the foregoing information acquiring method are implemented, with the same technical effects achieved. To avoid repetition, details are not described herein again.

An embodiment of this application further provides a network-side device 900. As shown in FIG. 9, the network-side device 900 includes an antenna 901, a radio frequency apparatus 902, and a baseband apparatus 903. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes to-be-sent information, and sends the information to the radio frequency apparatus 902; and the radio frequency apparatus 902 processes the received information and then sends the information out by using the antenna 901.

The radio frequency apparatus 902 may be located in the baseband apparatus 903. The method performed by the first network-side device or the second network-side device in the foregoing embodiment may be implemented in the baseband apparatus 903, and the baseband apparatus 903 includes a processor 904 and a memory 905.

The baseband apparatus 903 may include, for example, at least one baseband processing unit, where a plurality of chips are disposed on the baseband processing unit. As shown in FIG. 9, one of the chips is, for example, the processor 904, connected to the memory 905, to invoke the program in the memory 905 to perform the operation of the first network-side device or the second network-side device shown in the foregoing method embodiment.

The baseband apparatus 903 may further include a network interface 906, configured to exchange information with the radio frequency apparatus 902, where the interface is, for example, a common public radio interface (common public radio interface, CPRI for short).

Specifically, the network-side device in this embodiment of the present invention further includes instructions or a program stored in the memory 905 and executable on the processor 904. The processor 904 invokes the instructions or program in the memory 905 to perform the method performed by each module shown in FIG. 6 or 7, with the same technical effects achieved. To avoid repetition, details are not described herein again.

An embodiment of this application further provides a readable storage medium, where the readable storage medium stores a program or instructions, and when the program or instructions are executed by a processor, the processes in the embodiments of the foregoing information transmission method or information acquiring method are implemented, with the same technical effects achieved. To avoid repetition, details are not described herein again.

The processor is the processor in the network-side device in the foregoing embodiments. The readable storage medium includes a computer-readable storage medium, such as a computer read-only memory (Read-Only Memory, ROM), a random access memory (Random Access Memory, RAM), a magnetic disk, or an optical disc.

Another embodiment of this application provides a chip, where the chip includes a processor and a communication interface, the communication interface is coupled to the processor, and the processor is configured to run a program or instructions to implement the processes in the embodiments of the foregoing information transmission method or information acquiring method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a non-volatile storage medium, and the computer program product is executed by at least one processor, to implement the processes in the embodiments of the foregoing information transmission method or information acquiring method, with the same technical effects achieved. To avoid repetition, details are not described herein again.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information transmission method, comprising:
in a case that at least one remote user equipment UE establishes a radio resource control RRC connection with a first network-side device through a relay UE, configuring, by the first network-side device, UE context information, wherein
in a case that the UE context information is context information of the relay UE, the UE context information comprises first related information of the remote UE served by the relay UE; and/or, in a case that the UE context information is context information of the remote UE, the UE context information comprises second related information of the relay UE providing a relay service for the remote UE.

2. The method according to claim 1, further comprising:
receiving, by the first network-side device, an acquiring request for UE context sent by a second network-side device, wherein the acquiring request for UE context is sent by the second network-side device after receiving first information sent by the first UE; and
sending, by the first network-side device, feedback information to the second network-side device, wherein
in a case that the feedback information is an acquiring response of UE context and the first UE is the relay UE, the acquiring response of UE context comprises at least one of context information of the relay UE and context information of the remote UE; or
in a case that the feedback information is an acquiring response of UE context and the first UE is the remote UE, the acquiring response of UE context comprises at least one of context information of the remote UE and context information of the relay UE.

3. The method according to claim 1 or 2, wherein the first related information comprises at least one of the following:
identifier information of at least one remote UE; and
first configuration information associated with each piece of identifier information, wherein
the first configuration information comprises at least one of the following:
a mapping from a radio link control RLC channel of a first interface to an RLC channel of a second interface;
a mapping from an RLC channel of the first interface to a bearer of the remote UE;
a mapping from an RLC channel of the first interface to a bearer of the relay UE;
a mapping from an RLC channel of the second interface to a bearer of the remote UE;
a mapping from an RLC channel of the second interface to a bearer of the relay UE;
an RLC channel configuration of the first interface;
an RLC channel configuration of the second interface;
a bearer configuration of the remote UE; and
a bearer configuration of the relay UE, wherein
the first interface is a connection interface between the relay UE and the remote UE, and the second interface is a connection interface between the relay UE and the network-side device.

4. The method according to claim 1 or 2, wherein the second related information comprises at least one of the following:
identifier information of at least one relay UE; and
second configuration information associated with each piece of identifier information, wherein
the second configuration information comprises at least one of the following:
a mapping from an RLC channel of a first interface to an RLC channel of a second interface;
a mapping from an RLC channel of the first interface to a bearer of the remote UE;
a mapping from an RLC channel of the first interface to a bearer of the relay UE;
a mapping from an RLC channel of the second interface to a bearer of the remote UE;
a mapping from an RLC channel of the second interface to a bearer of the relay UE;
an RLC channel configuration of the first interface;
an RLC channel configuration of the second interface;
a bearer configuration of the remote UE; and
a bearer configuration of the relay UE, wherein
the first interface is a connection interface between the relay UE and the remote UE, and the second interface is a connection interface between the relay UE and the network-side device.

5. An information acquiring method, comprising:
sending, by a second network-side device, an acquiring request for UE context to the first network-side device, wherein the acquiring request for UE context is sent by the second network-side device after receiving first information sent by first UE, the first network-side device configures at least one of context information of a relay UE and context information of remote UE, the context information of the relay UE comprises first related information of the remote UE served by the relay UE, and the context information of the remote UE comprises second related information of the relay UE providing a relay service for the remote UE; and
acquiring, by the second network-side device, feedback information sent by the first network-side device, wherein
in a case that the feedback information is an acquiring response of UE context and the first UE is the relay UE, the acquiring response of UE context comprises at least one of context information of the relay UE and context information of the remote UE; or
in a case that the feedback information is an acquiring response of UE context and the first UE is the remote UE, the acquiring response of UE context comprises at least one of context information of the remote UE and context information of the relay UE.

6. The method according to claim 5, wherein the first related information comprises at least one of the following:
identifier information of at least one remote UE; and
first configuration information associated with each piece of identifier information, wherein
the first configuration information comprises at least one of the following:
a mapping from a radio link control RLC channel of a first interface to an RLC channel of a second interface;
a mapping from an RLC channel of the first interface to a bearer of the remote UE;
a mapping from an RLC channel of the first interface to a bearer of the relay UE;
a mapping from an RLC channel of the second interface to a bearer of the remote UE;
a mapping from an RLC channel of the second interface to a bearer of the relay UE;
an RLC channel configuration of the first interface;
an RLC channel configuration of the second interface;
a bearer configuration of the remote UE; and
a bearer configuration of the relay UE, wherein
the first interface is a connection interface between the relay UE and the remote UE, and the second interface is a connection interface between the relay UE and the network-side device.

7. The method according to claim 5, wherein the second related information comprises at least one of the following:
identifier information of at least one relay UE; and
second configuration information associated with each piece of identifier information, wherein
the second configuration information comprises at least one of the following:
a mapping from an RLC channel of a first interface to an RLC channel of a second interface;
a mapping from an RLC channel of the first interface to a bearer of the remote UE;
a mapping from an RLC channel of the first interface to a bearer of the relay UE;
a mapping from an RLC channel of the second interface to a bearer of the remote UE;
a mapping from an RLC channel of the second interface to a bearer of the relay UE;
an RLC channel configuration of the first interface;
an RLC channel configuration of the second interface;
a bearer configuration of the remote UE; and
a bearer configuration of the relay UE, wherein
the first interface is a connection interface between the relay UE and the remote UE, and the second interface is a connection interface between the relay UE and the network-side device.

8. The method according to claim 5, wherein in a case that the first UE is the relay UE, after the acquiring, by the second network-side device, feedback information sent by the first network-side device, the method further comprises:
sending, by the second network-side device, first RRC reconfiguration to the remote UE served by the first UE, wherein the first RRC reconfiguration comprises an incremental configuration generated based on the context of the remote UE.

9. The method according to claim 5, wherein in a case that the feedback information is acquiring failure information for UE context and the first UE is the relay UE, after the acquiring, by the second network-side device, feedback information sent by the first network-side device, the method further comprises:
sending, by the second network-side device, second RRC reconfiguration to the remote UE served by the first UE, wherein the second RRC reconfiguration comprises a full configuration.

10. The method according to claim 5, wherein in a case that the first UE is the remote UE, after the acquiring, by the second network-side device, feedback information sent by the first network-side device, the method further comprises:
sending, by the second network-side device, third RRC reconfiguration to the relay UE serving the first UE, wherein the third RRC reconfiguration comprises an incremental configuration generated based on the context of the relay UE.

11. The method according to claim 5, wherein in a case that the feedback information is acquiring failure information for UE context and the first UE is the remote UE, after the acquiring, by the second network-side device, feedback information sent by the first network-side device, the method further comprises:
sending, by the second network-side device, fourth RRC reconfiguration to the relay UE serving the first UE, wherein the fourth RRC reconfiguration comprises a full configuration.

12. An information transmission apparatus, comprising:
a first processing module, configured to configure UE context information in a case that at least one remote UE establishes an RRC connection with a first network-side device through relay UE, wherein
in a case that the UE context information is context information of the relay UE, the UE context information comprises first related information of the remote UE served by the relay UE; and/or, in a case that the UE context information is context information of the remote UE, the UE context information comprises second related information of the relay UE providing a relay service for the remote UE.

13. The apparatus according to claim 12, further comprising:
a first receiving module, configured to receive an acquiring request for UE context sent by a second network-side device, wherein the acquiring request for UE context is sent by the second network-side device after receiving first information sent by the first UE; and
a first sending module, configured to send feedback information to the second network-side device, wherein
in a case that the feedback information is an acquiring response of UE context and the first UE is the relay UE, the acquiring response of UE context comprises at least one of context information of the relay UE and context information of the remote UE; or
in a case that the feedback information is an acquiring response of UE context and the first UE is the remote UE, the acquiring response of UE context comprises at least one of context information of the remote UE and context information of the relay UE.

14. The apparatus according to claim 12 or 13, wherein the first related information comprises at least one of the following:
identifier information of at least one remote UE; and
first configuration information associated with each piece of identifier information, wherein
the first configuration information comprises at least one of the following:
a mapping from a radio link control RLC channel of a first interface to an RLC channel of a second interface;
a mapping from an RLC channel of the first interface to a bearer of the remote UE;
a mapping from an RLC channel of the first interface to a bearer of the relay UE;
a mapping from an RLC channel of the second interface to a bearer of the remote UE;
a mapping from an RLC channel of the second interface to a bearer of the relay UE;
an RLC channel configuration of the first interface;
an RLC channel configuration of the second interface;
a bearer configuration of the remote UE; and
a bearer configuration of the relay UE, wherein
the first interface is a connection interface between the relay UE and the remote UE, and the second interface is a connection interface between the relay UE and the network-side device.

15. The apparatus according to claim 12 or 13, wherein the second related information comprises at least one of the following:
identifier information of at least one relay UE; and
second configuration information associated with each piece of identifier information, wherein
the second configuration information comprises at least one of the following:
a mapping from an RLC channel of a first interface to an RLC channel of a second interface;
a mapping from an RLC channel of the first interface to a bearer of the remote UE;
a mapping from an RLC channel of the first interface to a bearer of the relay UE;
a mapping from an RLC channel of the second interface to a bearer of the remote UE;
a mapping from an RLC channel of the second interface to a bearer of the relay UE;
an RLC channel configuration of the first interface;
an RLC channel configuration of the second interface;
a bearer configuration of the remote UE; and
a bearer configuration of the relay UE, wherein
the first interface is a connection interface between the relay UE and the remote UE, and the second interface is a connection interface between the relay UE and the network-side device.

16. An information acquiring apparatus, comprising:
a second sending module, configured to send an acquiring request for UE context to the first network-side device, wherein the acquiring request for UE context is sent by the second network-side device after receiving first information sent by first UE, the first network-side device configures at least one of context information of relay UE and context information of remote UE, the context information of the relay UE comprises first related information of the remote UE served by the relay UE, and the context information of the remote UE comprises second related information of the relay UE providing a relay service for the remote UE; and
a second receiving module, configured to acquire feedback information sent by the first network-side device, wherein
in a case that the feedback information is an acquiring response of UE context and the first UE is the relay UE, the acquiring response of UE context comprises at least one of context information of the relay UE and context information of the remote UE; or
in a case that the feedback information is an acquiring response of UE context and the first UE is the remote UE, the acquiring response of UE context comprises at least one of context information of the remote UE and context information of the relay UE.

17. The apparatus according to claim 16, wherein the first related information comprises at least one of the following:
identifier information of at least one remote UE; and
first configuration information associated with each piece of identifier information, wherein
the first configuration information comprises at least one of the following:
a mapping from a radio link control RLC channel of a first interface to an RLC channel of a second interface;
a mapping from an RLC channel of the first interface to a bearer of the remote UE;
a mapping from an RLC channel of the first interface to a bearer of the relay UE;
a mapping from an RLC channel of the second interface to a bearer of the remote UE;
a mapping from an RLC channel of the second interface to a bearer of the relay UE;
an RLC channel configuration of the first interface;
an RLC channel configuration of the second interface;
a bearer configuration of the remote UE; and
a bearer configuration of the relay UE, wherein
the first interface is a connection interface between the relay UE and the remote UE, and the second interface is a connection interface between the relay UE and the network-side device.

18. The apparatus according to claim 16, wherein the second related information comprises at least one of the following:
identifier information of at least one relay UE; and
second configuration information associated with each piece of identifier information, wherein
the second configuration information comprises at least one of the following:
a mapping from an RLC channel of a first interface to an RLC channel of a second interface;
a mapping from an RLC channel of the first interface to a bearer of the remote UE;
a mapping from an RLC channel of the first interface to a bearer of the relay UE;
a mapping from an RLC channel of the second interface to a bearer of the remote UE;
a mapping from an RLC channel of the second interface to a bearer of the relay UE;
an RLC channel configuration of the first interface;
an RLC channel configuration of the second interface;
a bearer configuration of the remote UE; and
a bearer configuration of the relay UE, wherein
the first interface is a connection interface between the relay UE and the remote UE, and the second interface is a connection interface between the relay UE and the network-side device.

19. The apparatus according to claim 16, further comprising:
a third sending module, configured to: in a case that the first UE is the relay UE, after the second network-side device acquires the feedback information sent by the first network-side device, send first RRC reconfiguration to the remote UE served by the first UE, wherein the first RRC reconfiguration comprises an incremental configuration generated based on the context of the remote UE.

20. The apparatus according to claim 16, further comprising:
a fourth sending module, configured to: in a case that the feedback information is acquiring failure information for UE context and the first UE is the relay UE, after the second network-side device acquires the feedback information sent by the first network-side device, send second RRC reconfiguration to the remote UE served by the first UE, wherein the second RRC reconfiguration comprises a full configuration.

21. The apparatus according to claim 16, further comprising:
a fifth sending module, configured to: in a case that the first UE is the remote UE, after the second network-side device acquires the feedback information sent by the first network-side device, send third RRC reconfiguration to the relay UE serving the first UE, wherein the third RRC reconfiguration comprises an incremental configuration generated based on the context of the relay UE.

22. The apparatus according to claim 16, further comprising:
a sixth sending module, configured to: in a case that the feedback information is acquiring failure information for UE context and the first UE is the remote UE, after the second network-side device acquires the feedback information sent by the first network-side device, send fourth RRC reconfiguration to the relay UE serving the first UE, wherein the fourth RRC reconfiguration comprises a full configuration.

23. A network-side device, comprising a processor, a memory, and a program or instructions stored in the memory and executable on the processor, wherein when the program or the instructions are executed by the processor, the steps of the information transmission method according to any one of claims 1 to 4 are implemented, or the steps of the information acquiring method according to any one of claims 5 to 11 are implemented.

24. A readable storage medium, wherein the readable storage medium stores a program or instructions, and when the program or the instructions are executed by a processor, the steps of the information transmission method according to any one of claims 1 to 4 are implemented, or the steps of the information acquiring method according to any one of claims 5 to 11 are implemented.

25. A chip, comprising a processor and a communication interface, wherein the communication interface is coupled to the processor, and the processor is configured to run a program or instructions, to implement the steps of the information transmission method according to any one of claims 1 to 4, or implement the steps of the information acquiring method according to any one of claims 5 to 11.

26. A computer program product, wherein the computer program product is stored in a non-volatile storage medium, and the computer program product is executed by at least one processor, to implement the steps of the information transmission method according to any one of claims 1 to 4, or implement the steps of the information acquiring method according to any one of claims 5 to 11.
